# EUROPEAN PATENT APPLICATION

(11) **EP 3 518 089 A1**
(43) Date of publication of application: **31.07.2019**
(21) Application number: 17852319.7
(22) Date of filing: 13.09.2017
(51) Int. Cl.: G06F 3/0484

(54) **OPERATION OBJECT PROCESSING METHOD AND APPARATUS**

(30) Priority: 21.09.2016 CN 201610839763
(71) Applicant: Alibaba Group Holding Limited, Grand Cayman (KY)
(72) Inventor: LIU, Lindong, Hangzhou Zhejiang 311121 (CN)
(74) Representative: Branderhorst, Matthijs Pieter Arie
(86) International application number: PCT/CN2017/101523
(87) International publication number: WO 2018/054251

(57) **Abstract**

An operation object processing method and apparatus. The method comprises: receiving touch position information generated based on multi-point touch operation; determining operation objects corresponding to the touch position information; determining a target object set corresponding to the operation objects; and merging the operation objects according to the target object set. By means of the method, a user does not need to perform operations of long-pressing, dragging and the like on operation objects, and especially for multiple operation objects, the user can conveniently merge the multiple operation objects into a target object set by means of multi-point pressing.

## Description

### Technical Field

The present application relates to the field of computer technologies, and in particular, to an operation object processing method and apparatus.

### Background

With touchscreen terminals (a touchscreen terminal refers to a terminal having a touchscreen function), such as smart phones and tablet computers, having become popular, users can conveniently perform touch operations on the touchscreen terminals and no longer rely on input devices such as a mouse, a keyboard, and the like.

At present, an operation interface of a touchscreen terminal typically comprises different operation objects, such as application logos in a main interface, contacts in a list of contacts in an instant messaging application, and the like. A user can execute touch operations on a screen of a touchscreen terminal to merge operation objects, and the merged operation objects are typically stored in an object set.

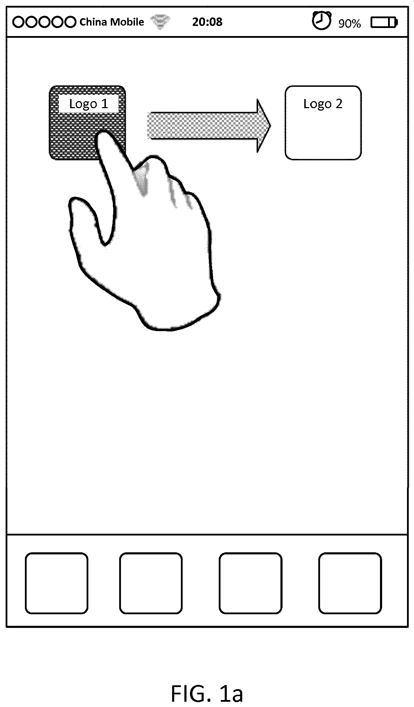

For example, in a scenario of merging logos, as shown in FIG. 1a (FIG. 1a only illustrates an interface comprising logos), a user long-presses a selected logo and uses a finger to drag the logo into a range of a target logo. At this point, the operating system of the touchscreen terminal creates a logo folder for these two logos, thereby achieving merge of the logos (the created logo folder can be deemed as an object set).

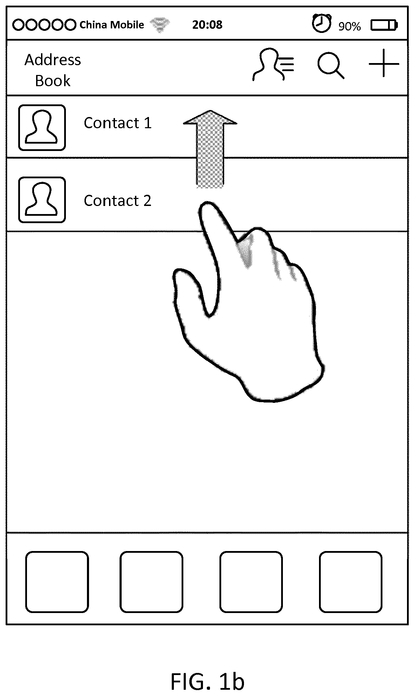

For another example, in a scenario of merging contacts, as shown in FIG. 1b (FIG. 1b only illustrates an interface comprising contacts), a user uses a finger to long-press any selected contact (contact 2 in FIG. 1b) and drag the selected contact into a range of a target contact (contact 1). At this point, the instant messaging application creates a group for these two contacts, thereby achieving merge of the contacts (the created group can also be deemed as an object set).

However, if the merge of operation objects is achieved in a dragging manner, then a user's finger needs to stay in contact with a terminal screen. In this case, if the spacing between two operation objects is big, the user's finger needs to drag for a long distance, which causes inconvenience. Moreover, fingers tend to lose the contact with the screen in the way of dragging. Once this occurs during the dragging, the user is required to perform the dragging again. In a scenario of merging a plurality of operation objects, in particular, operations in the above manner need to be performed for a number of times, which is inconvenient.

In addition, current technologies also support a user to implement merge of operation objects through menu options. However, this manner also requires the user to perform operations like search, select, and the like, which is inconvenient.

### Summary

Embodiments of the present application provide an operation object processing method to solve the problem in current technologies that the operation process to merge operation objects is inconvenient.

The embodiments of the present application provide an operation object processing apparatus to solve the problem in current technologies that the operation process to merge operation objects is inconvenient.

The embodiments of the present application employ the following technical solutions:
the operation object processing method according to the embodiments of the present application comprises:
receiving touch position information generated based on a multi-point touch operation;
determining operation objects corresponding to the touch position information;
determining a target object set corresponding to the operation objects; and
merging the operation objects according to the target object set.

The operation object processing apparatus according to the embodiments of the present application comprises:
a receiving module configured to receive touch position information generated based on a multi-point touch operation;
an operation object module configured to determine operation objects corresponding to the touch position information;
a target object set module configured to determine a target object set corresponding to the operation objects; and
a processing module configured to merge the operation objects according to the target object set.

At least one of the above technical solutions employed by the embodiments of the present application can achieve the following advantageous effect:
when a user wants to merge operation objects in a terminal, the user can perform multi-point touch operations on a number of operation objects, then the terminal's touchscreen generates corresponding touch position information based on the multi-point touch operations, and the terminal's operating system can determine corresponding operation objects according to the touch position information and further determine a target object set corresponding to the operation objects, thereby merging the multiple operated operation objects. Compared with current technologies, in the above-described manner according to the present application, a user does not need to perform operations of long-pressing, dragging and the like on operation objects, and especially for multiple operation objects, the user can conveniently merge the multiple operation objects into a target object set by a multi-point touch.

### Brief Description of the Drawings

The accompanying drawings herein are used to provide a further understanding of the present application and constitute a part of the present application. The illustrative embodiments and description of the present application are used to describe the present application, and do not constitute inappropriate limitation to the present application. In the accompanying drawings:
FIGS. 1a and 1b are schematic diagrams of operation manners for operation objects according to current technologies;
FIG. 2a is a schematic diagram of a process for handling operation objects according to some embodiments of the present application;
FIGS. 2b and 2c are schematic diagrams of an operation manner for operation objects according to some embodiments of the present application;
FIGS. 2d and 2e are schematic diagrams of an operation object processing scenario according to some embodiments of the present application;
FIGS. 3a-3d are schematic diagrams of examples of operation object processing according to some embodiments of the present application;
FIG. 4 is a schematic structural diagram of an operation object processing apparatus according to some embodiments of the present application.

### Detailed Description

To make the objectives, technical solutions, and advantages of the present application clearer, the technical solutions of the present application will be clearly and completely described below with reference to the embodiments and accompanying drawings of the present application. Apparently, the described embodiments are merely some, but not all, embodiments of the present application. All other embodiments obtainable by a person skilled in the art without creative effort and based on the embodiments of the present application shall fall within the scope of the present application.

As described above, in a process that a user merges operation objects displayed on a touchscreen terminal interface, it is often necessary for the user to long-press any selected operation object and drag it into a range of a target object for merging the operation objects; alternatively, the user can merge operation objects through menu options. However, operations are inconvenient in either of these two manners.

Therefore, an operation object processing method is provided in the embodiments of the present application, enabling a user to merge multiple operation objects in an interface in a multi-point touch manner . The user does not have to drag the operation objects or use a menu option, and therefore, the efficiency and convenience of merging operation objects can be improved.

It should be noted that the touchscreen terminal in the embodiments of the present application includes, but is not limited to, a smart phone, a tablet computer, a smart watch, a computer, a smart home control apparatus, and the like that have touchscreen function (for ease of description, a touchscreen terminal is referred to as a "terminal" in short).

A terminal's operation interface comprises operation objects, where the operation interface can be a main interface (including a desktop), a communication list interface, or an application interface of the terminal. Correspondingly, the operation objects can comprise at least one of logos, files, contacts in a communication list, and object sets, wherein the object sets can further comprise at least one of logo folders, folders for storing files, and contact groups. No limitation is imposed to the present application herein.

The technical solutions according to the embodiments of the present application will be described in detail below with reference to the accompanying drawings.

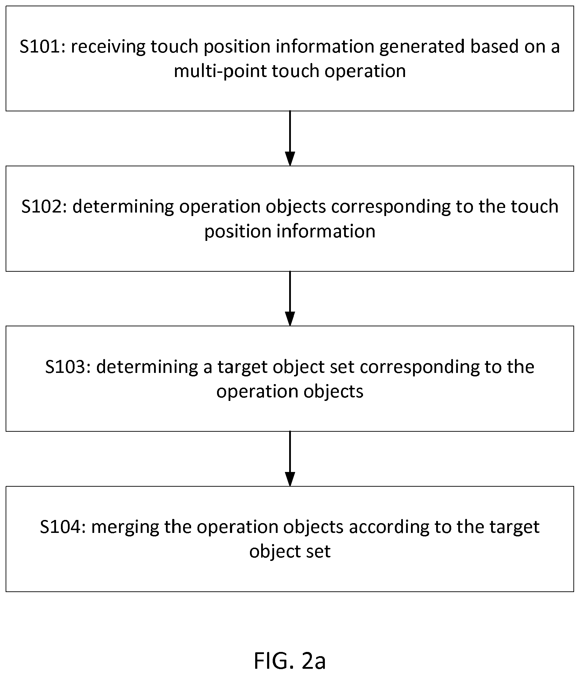

As shown in FIG. 2a, a process for handling operation objects according to some embodiments of the present application comprises, for example, the following steps:
S101: receiving touch position information generated based on a multi-point touch operation.

In the embodiments of the present application, the multi-point touch operation can include operations, such as touch, press, gather, and slide, at multiple positions on the terminal screen executed by the user through fingers, a touch pen, or other means. In addition, in the process that the user executes the multi-point touch operation, the multiple action points can be generated at different time. In other words, the user can touch different positions on the screen sequentially; however, the positions which have been touched by the user need to remain in contact with the screen while the user touching other positions. Otherwise, the multi-point touch will be invalid. No limitation is imposed to the present application herein.

In example applications, terminals receive touch operations through their own touchscreens. Types of touchscreens can include: resistive touchscreens, capacitive touchscreens, vector pressure sensing touchscreens, infrared touchscreens, or surface acoustic wave touchscreens. No limitation is imposed to the present application herein. When a terminal's own touchscreen receives a multi-point touch operation, the terminal can determine, according to changes of the capacitance, resistance, pressure, infrared ray, or acoustic wave on the touchscreen, action positions of the touch operation on the screen, and then generate touch position information. The process of generating touch position information uses existing touchscreen technologies and will not be elaborated herein.

S102: determining operation objects corresponding to the touch position information.

In the embodiments of the present application, different operation objects have respective position identifiers (e.g., coordinates), and the touch position information also comprises coordinates of the action positions of the touch operation. Then, operation objects corresponding to the touch position information can be determined.

It should be understood that if the multi-point touch operation executed by the user only corresponds to one operation object, no merge of operation objects can be achieved. Therefore, the multi-point touch operation executed by the user in the embodiments of the present application corresponds to at least two operation objects.

In a possible situation, each action point of the multi-point touch operation corresponds to one operation object. There is an one-to-one correspondence between the action points of the multi-point touch operation and the operation objects. At this point, the terminal determines that these operation objects are subjected to a touch operation, respectively.

In another possible situation, some action points of the multi-point touch operation are repeatedly placed on the same operation object. At this point, the operation object may correspond to two or more action points. In this situation, the terminal determines that the operation object is subjected to only one of the action points of touch operation. For example, the user uses fingers to execute a three-point touch operation on contacts displayed in a contact list, where the touch action points of two fingers are on a contact A, while the touch action point of the third finger is on a contact B. Accordingly, the terminal determines that operation objects subjected to the touch operation are the contact A and the contact B.

The above-described situations do not constitute a limitation to the present application.

S103: determining a target object set corresponding to the operation objects.

To merge operation objects, it is necessary to determine a target object set. As one manner in the embodiments of the present application, the target object set can be created by the terminal based on operation objects that have been operated. As another manner in the embodiments of the present application, the target object set can be an object set in the operation objects.

S104: merging the operation objects according to the target object set.

After the target object set is determined, the operated operation objects can be merged. The merge in the embodiments of the present application can be regarded as adding the operation objects into the target object set.

In some embodiments, the merge of operation objects in a terminal, such as logos or files, is essentially adding the operation objects into a corresponding target folder (including logo folders or folders for storing files) by changing the storage paths of these operation objects.

The merge of operation objects, such as contacts, is essentially establishing an association among the operation objects, such that the operation objects belong to the same contact group.

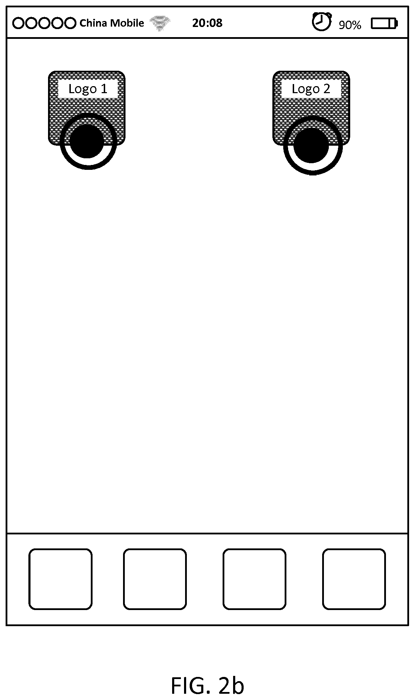

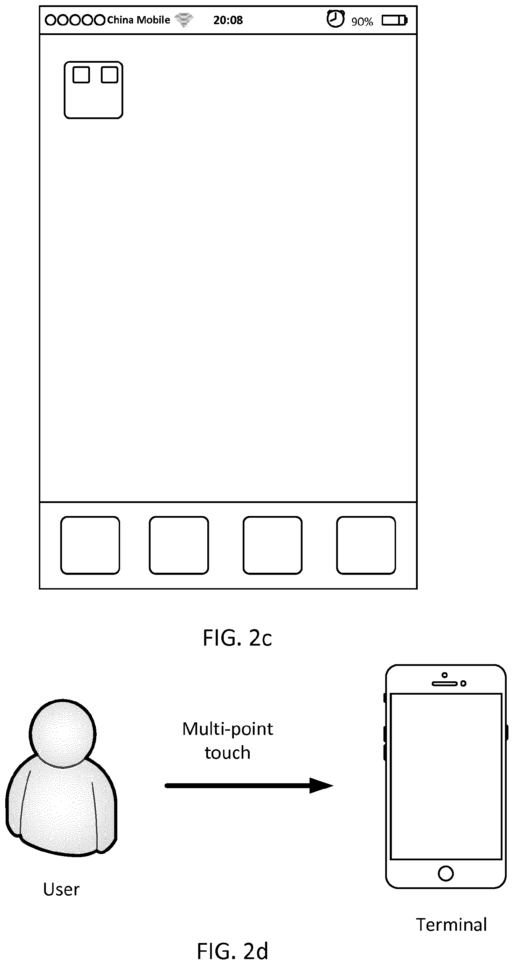

Based on the above description, in an example application, a user can use multi-point touch to merge a number of operation objects. As shown in FIG. 2b, in a main interface of a terminal, a user performs touches on two logos, respectively (the rings in FIG. 2b represent action points of the touches, and this description will not be repeated for their appearance in subsequent figures), to form a logo folder on the terminal, as shown in FIG. 2c. In FIG. 2c, the logo folder comprises a logo 1 and a logo 2. The example only uses logos as operation objects for description, while operation objects in other example applications are not limited to logos, but can be files, contact options, and other operation objects.

Through the above-described steps, when the user wants to merge the operation objects in the terminal, the user can execute a multi-point touch operation on a number of operation objects. Then, the touchscreen of the terminal generates corresponding touch position information based on the multi-point touch operation. The terminal's operating system can determine, according to the touch position information, corresponding operation objects and further determine a target object set corresponding to the operation objects, thereby merging the operated operation objects. Compared with current technologies, in the above manner of the present application, a user does not need to execute operations like long-pressing and dragging on operation objects, and especially for multiple operation objects, the user can conveniently merge the multiple operation objects into a target object set by a multi-point touch.

With regard to the above description, if operation objects belong to the terminal itself, e.g., logos, files, and the like, of the terminal, the terminal's own operating system can merge the operation objects. Namely, as shown in FIG. 2d, the user operates on the terminal, and the terminal's operating system acts as the execution entity to merge the operation objects.

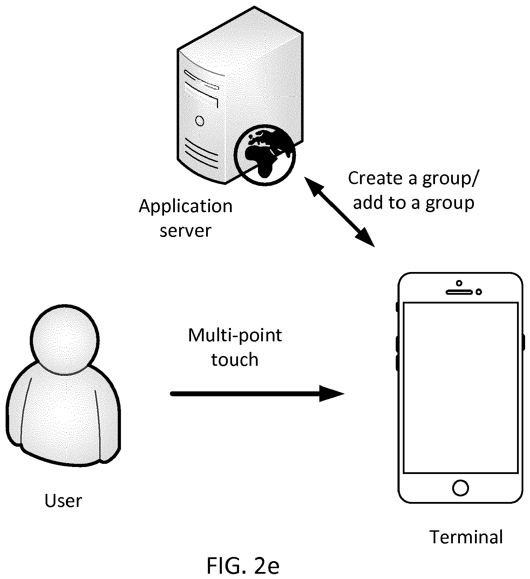

If operation objects belong to an application, e.g., contacts in an instant messaging application, the corresponding function in the application generates an operation object merging request and sends the request to a server corresponding to the application for processing. In other words, as shown in FIG. 2e, the server can act as the execution entity to merge the operation objects. For the server, to create a group for different contacts/add some contacts into a group essentially is to establish an association among different contacts, and the server saves the association. For example, corresponding association can be established based on account identifiers of different contacts and a group identifier. Considering that a server's creating a group or adding members into a group has become a technology extensively applied in social media businesses in practical applications, this technology will not be elaborated in the present application.

Moreover, it should be noted that operation objects on which a touch operation acts should be displayed simultaneously on a terminal screen. It should be understood that, if some operation objects are on the current page (the page displayed on the terminal screen) while other operation objects are on another page (the page not displayed on the terminal screen), a user is apparently not be able to execute a touch operation on the operation objects that are not displayed.

In an example application, a user may execute a multi-point touch operation on logos or files to add the logos or files to a corresponding folder; for contacts, the user may execute a multi-point touch operation to add a number of contacts to a corresponding group. However, if the operation objects acted on by the multi-point touch operation include both logos or files and contacts, then the terminal cannot merge the operation objects.

Therefore, in a general scenario, the operated operation objects in a process of merging the operation objects have the same object type.

Accordingly, the process of merging operation objects in a general scenario will be described in detail.

### Manner I

When a user intends to merge a plurality of logos into one logo folder, or when the user intends to create a group for a number of contacts, the user can execute a multi-point touch operation on the above operation objects to merge the operation objects.

In other words, in this manner, the operation objects acted on by the touch operation do not include an object set, namely, the operation objects acted on by the touch operation are typically logos, files or contacts. At this moment, before determining a target object set corresponding to the operation objects, the method further comprises: determining that the operation objects corresponding to the touch position information have the same object type.

Furthermore, the process of determining a target object set corresponding to the operation objects comprises: creating an object set for the operation objects, and determining the created object set as a target object set corresponding to the operation objects.

Therefore, in this manner, after receiving the multi-point touch operation, the terminal will determine that all operation objects acted on by the multi-point touch operation are of the same object type. For example, all operation objects acted on by the multi-point touch operation are logos, files, or contacts. These operation objects do not have any object set. Therefore, the terminal will create an object set for these operated operation objects, for example, creating a logo folder for the operated logos; for another example, creating a contact group for the operated contacts. The object set created by the terminal is used as the target object set. In the subsequent process, the terminal will add operated operation objects into the created target object set.

As an optional manner, once the operation objects acted on by the multi-point touch operation comprise different types of operation objects, it can be concluded that the multi-point touch operation is an invalid operation, and the terminal can make no response. No limitation is imposed to the present application herein.

### Manner II

In addition to the above manner, in an example application, a user may want to add a number of logos into a logo folder which has been created, or the user may want to add a number of contacts into a contact folder which has been created. Then, the user can execute a multi-point touch operation on the logos (or contacts) and the corresponding logo folder (or contact group) to add the operation objects into the corresponding object set.

In other words, in this manner, the operation objects acted on by a touch operation comprise object sets. It should be noted that, among the operation objects acted on by the touch operation, if objects in the object sets and the operation objects that are not the object sets belong to different types, then the terminal cannot merge these operation objects.

For example, assuming that the operation objects acted on by a touch operation comprise a contact group (the contact group can be regarded as an object set) and the contact group comprises different contacts (which can be regarded as objects), and assuming that the operation objects acted on by the touch operation further comprise a plurality of logos, the logos apparently cannot be merged into the contact group as the logos and the contacts do not belong to the same type.

Therefore, before determining a target object set corresponding to the operation objects, the method further comprises: determining that objects in the object sets and the operation objects other than the object sets have the same object type.

Based on this, furthermore, the determining a target object set corresponding to the operation objects comprises: selecting an object set from the object sets comprised in the operation objects and determining the selected object set as a target object set corresponding to the operation objects.

This manner can be further divided into two situations.

In one situation, a number of operation objects corresponding to the touch operation comprise only one object set. Then, the object set is determined to be the target object set. For example, a user executes a multi-point touch operation on two logos and one logo folder, then the logo folder can be determined to be the target object set, and the terminal can subsequently add these two logos into the logo folder.

In another situation, a number of operation objects corresponding to the touch operation comprise two (or more) object sets. Then, the terminal will select one object set as the target object set. In an example application, the terminal can randomly select any of the object sets, or the selection can be made by the user. When the selection is made by the user, the selecting and determining an object set as the target object set comprises, for example, receiving a selection instruction from the user, and determining an object set corresponding to the selection instruction as the target object set.

In the embodiments of the present application, the terminal can use a pop-up, a floating interface, or other manners to display a selection interface. The selection interface comprises object sets acted on by the multi-point touch operation, and the user can select any one of the object sets in the selection interface. The terminal will then determine the object set selected by the user as the target object set.

For the above-described two manners, it should be noted that, in the process of merging operation objects, if the operation objects are logos or files in the terminal or contacts in the terminal's address book, then the terminal can create a corresponding target object set or add operation objects other than an object set into an object set which has been created.

On the other hand, if the operation objects acted on by the multi-point touch operation are objects in an application (e.g., contacts in an instant messaging application), then the terminal sends, according to the multi-point touch operation by the user, a request for creating a target object set or an addition request to a corresponding server (the server typically refers to the server corresponding to the application), and the server creates a corresponding target object set or adds the operation objects into an object set. In the case where the server creates a group, the group should comprise all contacts operated by the user and the user himself/herself.

In addition, in both of the above-described two manners, the terminal can display a corresponding confirmation interface to the user, and the user can execute a corresponding confirmation operation in the confirmation interface, including: confirming whether to create a target object set, editing the name of the target object set, confirming whether to add the operation objects other than an object set into the target object set, and the like. As an optional manner in the embodiments of the present application, therefore, the merging the operation objects comprises: merging the operation objects according to a confirmation instruction sent by the user.

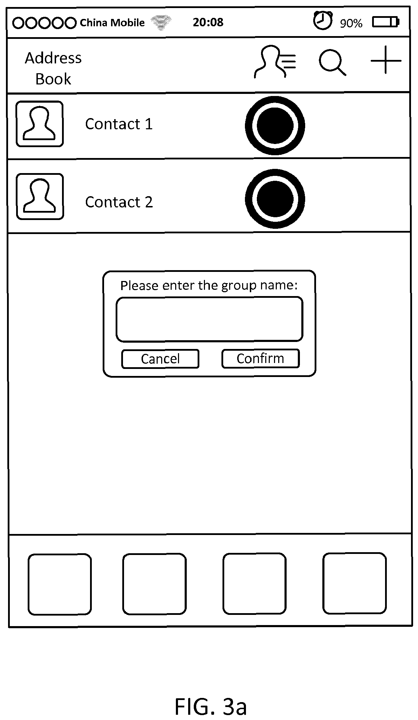

For example, assuming that the user executes a touch operation on two contacts 1 and 2, then the terminal can display a confirmation interface to the user, as shown in FIG. 3a. In the confirmation interface, the user can edit the group name. After the confirmation is clicked, the application will create a corresponding group "qun." It could be understood that the group "qun" comprises the contact 1, the contact 2, and the user.

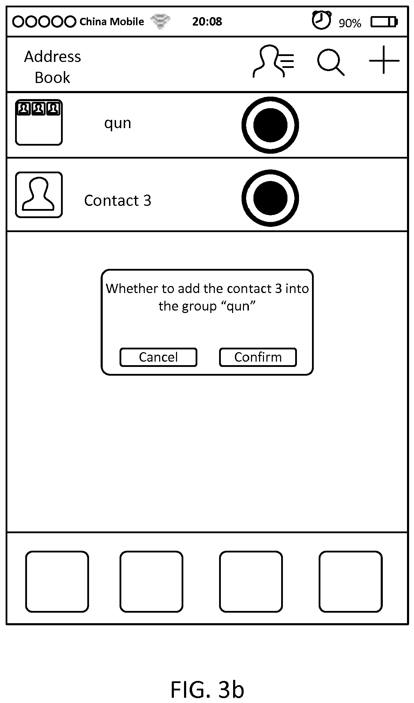

For another example, assuming that the user executes a touch operation on a contact 3 and the group "qun" created in the above example, then the terminal can display a confirmation interface to the user, as shown in FIG. 3b. In the confirmation interface, the user can determine whether to add the contact 3 into the group "qun." If the confirmation is selected, the application adds the contact 3 into the group "qun."

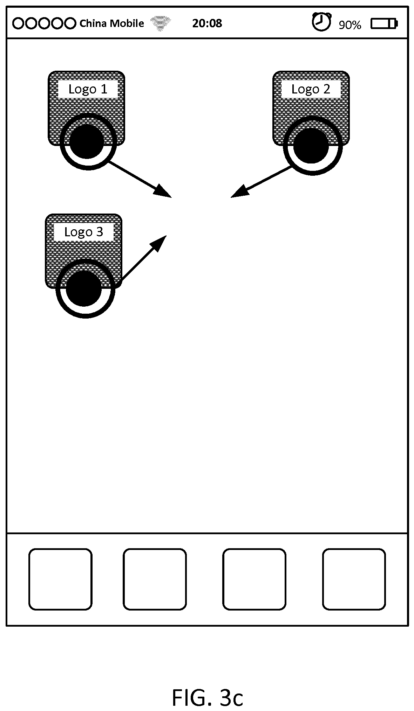

In addition, in an optional manner in practical operations other than the manners illustrated above, a multi-point touch operation issued by the user can also be a multi-point gathering operation. For example, as shown in FIG. 3c, it is assumed that the user executes a multi-point gathering operation on three logos in the terminal interface, respectively (the black arrows in FIG. 3c represent the gathering directions of the user's fingers.)

As shown in FIG. 3c, in this manner, the receiving touch position information generated based on a multi-point touch operation is, for example, receiving touch track information generated based on a multi-point gathering operation. Then, the determining operation objects corresponding to the touch position information is, for example, determining operation objects corresponding to starting positions of touch tracks according to the touch track information. Namely, the operation objects corresponding to the starting positions of the touch tracks are operation objects acted on by the multi-point gathering operation. After the operation object set is determined, the above-described merging process can be executed, which will not be repeated herein.

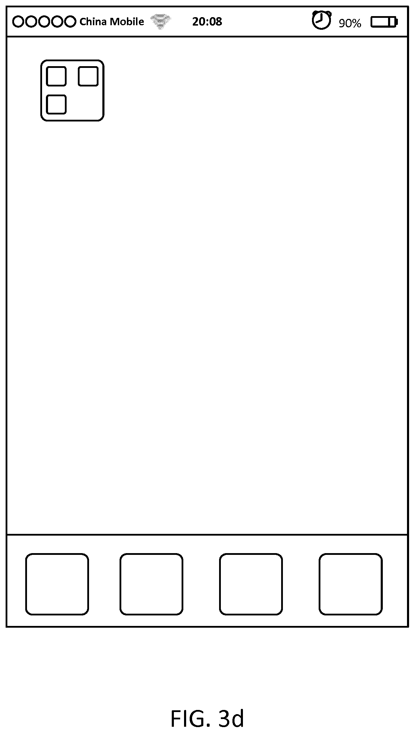

Using the example shown in FIG. 3c again, the terminal can merge the three logos into the same logo folder, namely, as shown in FIG. 3d.

The above examples do not constitute a limitation to the present application.

With reference to the above description, it can be seen that, using the manners of multi-point touch in the embodiments of the present application, a user can conveniently achieve rapid merge of operation objects on an interface.

The operation object processing method according to the embodiments of the present application is described above. Based on the same concept, the embodiments of the present application further provide an operation object processing apparatus.

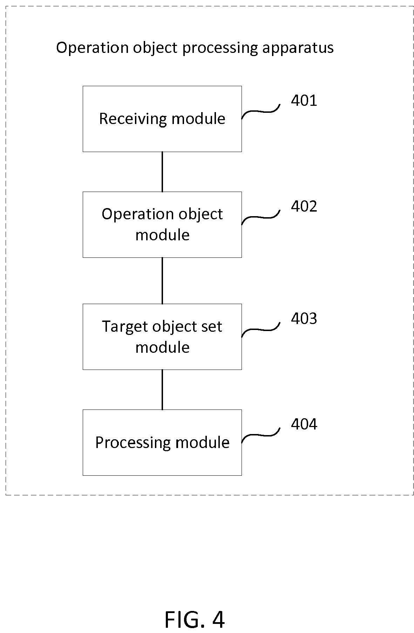

As shown in FIG. 4, the operation object processing apparatus comprises:
a receiving module 401 configured to receive touch position information generated based on a multi-point touch operation;
an operation object module 402 configured to determine operation objects corresponding to the touch position information;
a target object set module 403 configured to determine a target object set corresponding to the operation objects; and
a processing module 404 configured to merge the operation objects according to the target object set.

In one manner,
when the operation objects do not comprise an object set, the operation object module 402 determines that the operation objects corresponding to the touch position information have the same object type.

The target object set module 403 creates an object set for the operation objects, and determines the created object set as the target object set corresponding to the operation objects.

In another manner,
when the operation objects comprise object sets, the operation object module 402 determines that objects in the object sets and the operation objects other than the object sets have the same object type.

The target object set module 403 selects an object set from the object sets comprised in the operation objects and determines the selected object set as the target object set corresponding to the operation objects.

Furthermore, the target object set module 403 receives a selection instruction from the user, and determines an object set corresponding to the selection instruction as the target object set corresponding to the operation objects.

The processing module 404 receives a confirmation operation from the user and merges the operation objects according to the confirmation instruction issued by the user.

A multi-point touch operation can also be a multi-point gathering operation. Then, the receiving module 401 receives touch track information generated based on the multi-point gathering operation. The determining module 402 determines operation objects corresponding to starting positions of touch tracks according to the touch track information.

Based on the above description, the operation objects comprise at least one of logos, files, contacts in a communication list, and object sets; and the object sets comprise at least one of logo folders, folders for storing files, and contact groups.

The present invention is described with reference to the flow charts and/or block diagrams of the method, device (system), and computer program product according to the embodiments of the present invention. It should be understood that every process and/or block of the flow charts and/or block diagrams and a combination of processes and/or blocks of the flow charts and/or block diagrams can be implemented by computer program instructions. These computer program instructions can be provided to a general-purpose computer, a dedicated computer, an embedded processor, or a processor of another programmable data processing device, thereby producing a machine and causing the instructions to, when executed by the computer or the processor of another programmable data processing device, produce an apparatus for implementing functions specified in one or more processes in the flow charts and/or one or more blocks in the block diagrams.

These computer program instructions can also be stored in a computer readable storage medium capable of guiding a computer or other programmable data processing devices to work in a particular manner, causing the instructions stored in the computer readable storage medium to produce a manufactured article that includes an instruction device for implementing functions specified in one or more processes in the flow charts and/or one or more blocks in the block diagrams.

These computer program instructions can also be loaded onto a computer or other programmable data processing devices, causing a series of operation steps to be executed on the computer or other programmable data processing devices to produce a process of computer implementation. As a result, the instructions executed on the computer or other programmable data processing devices provide steps to implement functions specified in one or more processes in the flow charts and/or one or more blocks in the block diagrams.

In a typical configuration, a computation device includes one or more processors (CPUs), input/output interfaces, network interfaces, and a memory.

The memory may include computer readable media, such as a volatile memory, a Random Access Memory (RAM), and/or a non-volatile memory, e.g., a Read-Only Memory (ROM) or a flash RAM. The memory is an example of a computer readable medium.

Computer readable media include permanent, volatile, mobile and immobile media, which can implement information storage through any method or technology. The information may be computer readable instructions, data structures, program modules or other data. Examples of storage media of computers include, but are not limited to, Phase-change RAMs (PRAMs), Static RAMs (SRAMs), Dynamic RAMs (DRAMs), other types of Random Access Memories (RAMs), Read-Only Memories (ROMs), Electrically Erasable Programmable Read-Only Memories (EEPROMs), flash memories or other memory technologies, Compact Disk Read-Only Memories (CD-ROMs), Digital Versatile Discs (DVDs) or other optical memories, cassettes, cassette and disk memories or other magnetic memory devices or any other non-transmission media, which can be used for storing information accessible to a computation device. According to the definitions herein, the computer readable media do not include transitory media, such as modulated data signals and carriers.

It should be further noted that the terms of "including," "comprising" or any other variants thereof intend to encompass a non-exclusive inclusion, causing a process, method, commodity or device comprising a series of elements to not only comprise these elements, but also comprise other elements that are not specifically listed, or further comprise elements that are inherent to the process, method, commodity or device. When there is no further restriction, elements defined by the statement "comprising one..." do not exclude that a process, method, commodity or device comprising the above elements further comprises additional identical elements.

A person skilled in the art should understand that the embodiments of the present application may be provided as a method, a system, or a computer program product. Therefore, the present application may be implemented as a complete hardware embodiment, a complete software embodiment, or an embodiment combing software and hardware. Moreover, the present application may be in the form of a computer program product implemented on one or more computer usable storage media (including, but not limited to, a magnetic disk memory, CD-ROM, an optical memory, and the like) comprising computer usable program codes therein.

Only embodiments of the present application are described above, which are not used to limit the present application. To a person skilled in the art, the present application may have various modifications and variations. Any modification, equivalent substitution or improvement made within the spirit and principle of the present application shall be encompassed by the claims of the present application.

## Claims

1. An operation object processing method, comprising:
receiving touch position information generated based on a multi-point touch operation;
determining operation objects corresponding to the touch position information;
determining a target object set corresponding to the operation objects; and
merging the operation objects according to the target object set.

2. The method according to claim 1, wherein, when the operation objects do not comprise an object set, before determining a target object set corresponding to the operation objects, the method further comprises:
determining that the operation objects corresponding to the touch position information have the same object type.

3. The method according to claim 2, wherein the determining a target object set corresponding to the operation objects comprises:
creating an object set for the operation objects, and determining the created object set as the target object set corresponding to the operation objects.

4. The method according to claim 1, wherein, when the operation objects comprise object sets, before determining a target object set corresponding to the operation objects, the method further comprises:
determining that objects in the object sets and the operation objects other than the object sets have the same object type.

5. The method according to claim 4, wherein the determining a target object set corresponding to the operation objects comprises:
selecting an object set from the object sets comprised in the operation objects and determining the selected object set as the target object set corresponding to the operation objects.

6. The method according to claim 5, wherein the selecting and determining an object set as a target object set corresponding to the operation objects comprises:
receiving a selection instruction from a user; and
determining an object set corresponding to the selection instruction as the target object set corresponding to the operation objects.

7. The method according to claim 1, wherein the merging the operation objects comprises:
merging the operation objects according to a confirmation instruction issued by the user.

8. The method according to claim 1, wherein the receiving touch position information generated based on a multi-point touch operation comprises:
receiving touch track information generated based on a multi-point gathering operation;
the determining operation objects corresponding to the touch position information comprises:
determining operation objects corresponding to starting positions of touch tracks according to the touch track information.

9. The method according to any one of claims 1-8, wherein the operation objects comprise at least one of logos, files, contacts in a communication list, and object sets; and
the object sets comprise at least one of logo folders, folders for storing files, and contact groups.

10. An operation object processing apparatus, comprising:
a receiving module configured to receive touch position information generated based on a multi-point touch operation;
an operation object module configured to determine operation objects corresponding to the touch position information;
a target object set module configured to determine a target object set corresponding to the operation objects; and
a processing module configured to merge the operation objects according to the target object set.

11. The apparatus according to claim 10, wherein, when the operation objects do not comprise an object set, the operation object module determines that the operation objects corresponding to the touch position information have the same object type.

12. The apparatus according to claim 11, wherein the target object set module creates an object set for the operation objects, and determines the created object set as the target object set corresponding to the operation objects.

13. The apparatus according to claim 10, wherein, when the operation objects comprise object sets, the operation object module determines that objects in the object sets and the operation objects other than the object sets have the same object type.

14. The apparatus according to claim 13, wherein the target object set module selects an object set from the object sets comprised in the operation objects and determines the selected object set as the target object set corresponding to the operation objects.

15. The apparatus according to claim 14, wherein the target object set module receives a selection instruction from a user, and determines an object set corresponding to the selection instruction as the target object set corresponding to the operation objects.

16. The apparatus according to claim 10, wherein the processing module merges the operation objects according to a confirmation instruction issued by the user.

17. The apparatus according to claim 10, wherein the receiving module receives touch track information generated based on a multi-point gathering operation; and
the determining module determines operation objects corresponding to starting positions of touch tracks according to the touch track information.

18. The apparatus according to any one of claims 10-17, wherein the operation objects comprise at least one of logos, files, contacts in a communication list, and object sets; and
the object sets comprise at least one of logo folders, folders for storing files, and contact groups.
